# EUROPÄISCHE PATENTSCHRIFT

(11) **EP 1 505 383 B1**
(45) Veröffentlichungstag und Bekanntmachung des Hinweises auf die Patenterteilung: **01.06.2011**
(21) Anmeldenummer: 04014079.0
(22) Anmeldetag: 16.06.2004
(51) Int. Cl.: G01N 23/04

(54) **Proben für die Transmissions-Elektronen-Mikroskopie**
TEM Probe
Sonde de MET

(30) Priorität: 31.07.2003 CH 13352003
(43) Veröffentlichungstag der Anmeldung: 09.02.2005
(73) Patentinhaber: Leica Mikrosysteme GmbH, 1170 Wien (AT)
(72) Erfinder: Grünewald, Wolfgang, 09122 Chemnitz (DE); Vogt, Alex, 9470 Buchs (CH)
(74) Vertreter: Wegmann, Urs

(56) Entgegenhaltungen:
- US-A- 5 907 157
- US-A- 5 940 678
- US-A1- 2002 000 522
- SENZ S ET AL: "Optimization of the wire-shadow TEM cross-section preparation technique" ULTRAMICROSCOPY;ULTRAMICROSCOPY DEC 1997 ELSEVIER SCI B.V., AMSTERDAM, NETHERLANDS, Bd. 70, Nr. 1-2, Dezember 1997 (1997-12), Seiten 23-28, XP002261103
- KAWASAKI M ET AL: "A NEW SPECIMEN PREPARATION METHOD FOR CROSS-SECTION TEM USING DIAMOND POWDERS" JOURNAL OF ELECTRON MICROSCOPY, JAPANESE SOCIETY FOR ELECTRON MICROSCOPY. TOKYO, JP, Bd. 48, Nr. 2, 1999, Seiten 131-137, XP000805799 ISSN: 0022-0744

## Beschreibung

Die Erfindung bezieht sich auf eine TEM-Probe gemäss Oberbegriff nach Anspruch 1 sowie auf ein Verfahren zur Herstellung einer solchen Probe gemäss Oberbegriff nach Anspruch 7.

Proben für die Transmissionselektronenmikroskopie (TEM) können auf verschiedene Art und Weise präpariert werden. Um Proben mit einem TEM betrachten zu können, müssen diese entsprechend definiert gedünnt werden, so dass diese im TEM durchstrahlt werden können. Hierbei ist die Qualität der Bildauflösung ganz wesentlich von der Qualität der Probe abhängig. Dafür sollte die Probe auf eine entsprechend gewünschte definierte Dicke gleichförmig eingestellt werden durch einen entsprechenden Ätzvorgang. Hierbei ist es wichtig, dass bei diesem Ätzvorgang die Probenstruktur nicht durch den Vorgang selbst verändert wird. Zur Herstellung einer solchen Probe wird ein Stück des zu untersuchenden Materiales aus dem Probenkörper mechanisch herausgesägt und anschliessend auf die notwendige beziehungsweise gewünschte Dicke durch Ätzen weiter gedünnt, um die Probe anschliessend mit einem TEM untersuchen zu können. Die nasschemische Ätzmethode ist diesbezüglich nicht zielführend. Aus diesem Grunde werden für die hochqualitativen TEM-Proben heute die Proben mit einem Ionenstrahl durch Ätzen bearbeitet. Als Ionenstrahl wird beispielsweise ein Argon-Ionenstrahl mit einem Durchmesser von ca. 1 mm verwendet.

Proben für die Transmissionselektronenmikroskopie können mittlerweile auf verschiedene Art präpariert werden. In der Literatur ist ein Verfahren beschrieben worden, das sich "Wire shadow TEM cross section preparation technique" nennt. Diese sogenannte Drahtabschattungsmethode ist beschrieben in Ultra Microscopy 70 (1997) 23-28, erschienen im Elsevier Science B. V. Verlag 1997 mit der Überschrift "Optimisation of the wire shadow TEM cross section preparation technique" mit den Autoren S.Senz, P.Kopperschmidt, E. Langer, H.Sieber, D.Hesse. Hierbei wird vorgeschlagen, eine Probe des zu untersuchenden Materiales aus dem Festkörper mit einer Diamantsäge herauszusägen. Das herausgesägte Probenstück ist rechteckförmig, etwa 2-3 mm lang und 200-300 µm breit. Die Breite des Probenstückes wird zusätzlich durch mechanische Bearbeitung auf einen Wert von 100 µm reduziert. Bei diesem Vorgang darf die stirnseitige Fläche nicht verletzt werden. Die Probe wurde beispielsweise aus einem Halbleitermaterial wie Sizilium herausgeschnitten. Nach dem Heraussägen des Probenkörpers erfolgt anschliessend das Auflegen, Positionieren und Verkleben eines ca. 10 µm dicken Drahtes (Abschattungsdraht) beziehungsweise einer Faser auf die Stirnseite der Probe, welches die ursprüngliche Probenoberfläche darstellt. Hierzu wird an beiden Enden des Probenkörpers auf die Oberfläche etwas Epoxykleber aufgebracht und danach die Faser, welche einige mm lang ist, auf der Probenoberfläche zentriert und mit dem Klebstoff benetzt. Der Klebstoff sollte hierbei durch Kapillarkräfte in die Zwischenräume zwischen dem Probenkörper und der Faser fliessen. Anschliessend wird der Klebstoff ausgehärtet. Dieser ganze Vorgang muss sehr präzise erfolgen und ist schwierig durchzuführen. Nach Aushärtung des Klebers wird die Probe in einen Probenhalter eingelegt und in einem Vakuumrezipienten durch Ionenbeschuss senkrecht zur Probenoberfläche werden die nicht abgeschatteten Probenbereiche abgetragen, soweit dass ein elektronentransparenter Kamm im Randschatten entsteht in Querrichtung zur Probenoberfläche. Während des Ionenbeschusses verringert sich ebenfalls der Durchmesser der Abschattungsfaser, wodurch der Kamm, eine Keilform annimmt. In Abhängigkeit der Ionenabtragrate des zu präparierenden Materials der Abtragrate des Abschattungsdrahtes und dessen Durchmesser kann die Kammhöhe beeinflusst werden. Um eine ebene Oberflächenmorphologie an den Kammseitenwänden zu erzeugen, ist ein homogener Materialabtrag notwendig. Dies kann durch die Wahl einer geeignet hohen Ionenbeschleunigungsspannung und auch einer zusätzlich oszillierenden Relativbewegung der Probe zum einfallenden Ionenstrahl erreicht werden. Im Ergebnis dieser Querschnittspräparation entsteht ein elektronentransparenter Kamm mit einer Länge von einigen hundert µm bis mm. An dem oberflächennahen Randgebiet des Kammes sind hochauflösende, elektronenoptische Charakterisierungen möglich. Ein Problem der beschriebenen Präparationstechnik besteht darin, dass sie sehr schwierig auszuführen ist. Qualitätsbestimmende Präparationsschritte sind hierbei das präzise Aufkleben der Abschattungsfaser. Ausserdem dauert die Präparation einer Probe mehrere Stunden, welches die Wirtschaftlichkeit des Verfahrens stark vermindert. Aus den vorerwähnten Gründen hat diese Form der Präparationstechnik bisher in der Fachwelt wenig Eingang gefunden.

Der Erfindung liegt die Aufgabe zugrunde die Nachteile des Standes der Technik zu beseitigen. Es soll insbesondere eine Drahtabschattungs- beziehungsweise Faserabschättungsmethode realisiert werden, welche es ermöglicht TEM-Proben zu realisieren mit geringem Aufwand, hoher Zuverlässigkeit und guter Probenqualität bei hoher Wirtschaftlichkeit.

Die Aufgabe wird erfindungsgemäss durch die Vorrichtung nach Anspruch 1 gelöst unter vorgehen nach dem Verfahren nach Anspruch 7. Die abhängigen Ansprüche definieren weitere vorteilhafte Ausführungsformen und Verfahrensschritte.

Erfindungsgemäss wird die TEM-Probe aus einem Festkörpermaterial wie einem Halbleiter geschnitten, wobei ein länglicher Probenkörper entsteht mit einer stirnseitigen Probenoberfläche auf welche im wesentlichen ganzflächig ein Klebstoff der fliessenden Art aufgebracht ist, welcher nach dem Auflegen einer Faser ausgehärtet wird. Beim Auflegen der Faser wird diese selbständig in Längsrichtung des Probenkörpers an der Probenoberfläche ausgerichtet und in Probenbreite durch die auftretenden Kapillarkräfte zentriert. Durch die im wesentlichen ganzflächige Benetzung der Probenoberfläche mit dem Klebstoff kann die Faser auf ihrer ganzen Länge benetzt werden und mit Hilfe der Kapillarkräfte selbständig positioniert werden, so dass ein präzises Auflegen der Faser nicht notwendig ist. Andererseits werden auch durch diese Art der Klebstoffapplikation strukturierte Probenoberflächen vollständig mit dem Klebstoff gefüllt, derart dass entlang der Faser keine Zwischenräume beziehungsweise Hohlräume entstehen, was für die Qualität der TEM-Probe sehr negativ wäre. Bei Vorgehen gemäss der Lehre nach Stand der Technik sind solche Hohlräume insbesondere bei strukturierten Oberflächen nicht immer ganz vermeidbar, da der Klebstoff nur an den Probenenden appliziert wird und auf der ganzen Länge sich zwischen Faser und Probenoberfläche mit Hilfe der Kapillarkräfte verteilen sollte. Das erfindungsgemässe Vorgehen ist deshalb besonders geeignet für die Herstellung von Proben aus Halbleitermaterialien wie sie in der Mikroelektronik verwendet werden. In diesem Fall werden Proben beispielsweise aus einem Halbleiterwafer wie beispielsweise Silizium herausgeschnitten, wobei ein solcher Wafer typischerweise einige Zehntel mm dick ist und auf der operativen Seite strukturiert ist und verschiedene Schichten aufweist, durch welche die mikroelektronischen Bauteile realisiert werden.

Die Fasern richten sich insbesondere dann besonders gut und selbständig ohne zusätzliches Zentrieren aus, wenn die Probenbreite über dies schmal genug ist. Wenn die Probenbreite weniger als 20 µm beträgt, dann verläuft der Effekt der selbsttätigen Ausrichtung der Faser auf der Probenoberfläche besonders gut. Es hat sich gezeigt, dass optimale Resultate erreicht werden, wenn die Probenbreite im Bereich von 10 bis 20 µm liegt. Der Selbstausrichtungseffekt der Faser funktioniert auch dann noch, wenn diese in ihrem Durchmesser leicht grösser ist als die Probenbreite, wobei es jedoch besser ist, wenn der Faserdurchmesser nicht grösser als die Probenbreite ist. Es hat sich herausgestellt, dass besonders gute Resultate erreicht werden für einen Faserdurchmesser im Bereich von 5 bis 20 µm. Es ist zusätzlich günstig, wenn die Faser mindestens die Hälfte des Klebstoffes abdeckt. Als Klebstoff sind fliessende Klebstoffe geeignet, die nach einer gewissen Zeit selbst aushärten oder aushärtbar sind. Bevorzugt sind hierbei Epoxyklebstoffe. Als Fasermaterial eignet sich insbesondere Kohlenstoff oder Siliziumkarbid, welches drahtförmig mit im wesentlichen kreisrundem Querschnitt hergestellt ist.

Die derart vorbereitete Probe wird nun in einem weiteren Behandlungsschritt durch Ionenstrahlätzen gedünnt. Hierbei ist die Ionenstrahleinfallsrichtung im wesentlichen senkrecht zur Probenoberfläche und auf die Faser gerichtet. Durch die Abschattungswirkung der Faser entsteht eine keilförmige Probe, die an der dünnsten Stelle elektronentransparent wird. Hierbei ist es vorteilhaft, den Ionenstrahl gegenüber der Probe innerhalb der senkrechten Ebene zur Probenoberfläche durch die Faser um einen bestimmten Winkel zu pendeln. Es wird solange geätzt bis die gewünschte Elektronentransparenz für das TEM in Querrichtung zum Kamm erreicht ist. Die Faser muss hierbei nicht zwingend durch das Ätzen verschwinden. Sie kann stehenbleiben oder ganz beziehungsweise teilweise weggeätzt werden. Vorteilhaft ist, solange zu ätzen bis die Faser an einer Stelle verschwunden ist. In diesem Fall entstehen leichte Dickenunterschiede des Probenkammes und es kann eine günstige Betrachtungsstelle für das TEM gewählt werden.

Die Vorteile der erfindungsgemässen Methode liegen darin, dass eine Zielpräparation ohne weiteres möglich ist. Dies bedeutet, dass der gewünschte Ort für die Untersuchung der Probe genau definiert werden kann, beispielsweise mit einer Genauigkeit im µm-Bereich. Die dünne Probe führt ausserdem zu geringen Ätzzeiten im Bereich von einer Stunde und zu gesamten Präparationszeiten von etwa zwei Stunden, was die Probenvorbereitung äusserst wirtschaftlich macht. Gemäss Stand der Technik wird für die Herstellung von Proben für die Zielpräparation ein Zeitaufwand im Bereich von 3 bis 10 Stunden benötigt. Gemäss der vorliegenden erfindungsgemässen Methode können grosse, mehrere mm lange saubere elektronentransparente Probenbereiche hergestellt werden. Dies bedeutet, dass die ursprüngliche Struktur des zu untersuchenden Materiales in der Probe selbst wenig bis gar nicht verändert wird, also eine geringe Oberflächenamorphisierung beziehungsweise Störtiefe im Material auftritt, womit eine hohe Originaltreue der Abbildung im TEM des zu untersuchenden Materiales möglich ist.

Die Erfindung wird nun nachfolgend beispielsweise und anhand von schematischen Zeichnungen näher erläutert. Es zeigen:
- Fig. 1a: Eine Probe mit aufgeklebter Faser gemäss Stand der Technik in dreidimensionaler Darstellung
- Fig. 1b: Eine Probe mit aufgeklebter Faser gemäss Stand der Technik teilweise abgeätzt durch einen Ionenstrahl in dreidimensionaler Darstellung
- Fig. 1c: Eine Probe mit aufgeklebter Faser gemäss Stand der Technik abgeätzt im Endzustand in dreidimensionaler Darstellung
- Fig. 1d: Eine Probe mit aufgeklebter Faser vor dem Ätzen gemäss Stand der Technik im Längsschnitt
- Fig. 2: Eine erfindungsgemässe Probe mit ganzflächig aufgeklebter Faser in dreidimensionaler Darstellung
- Fig. 3: Eine erfindungsgemässe Probe mit ganzflächig aufgeklebter Faser im Längsschnitt

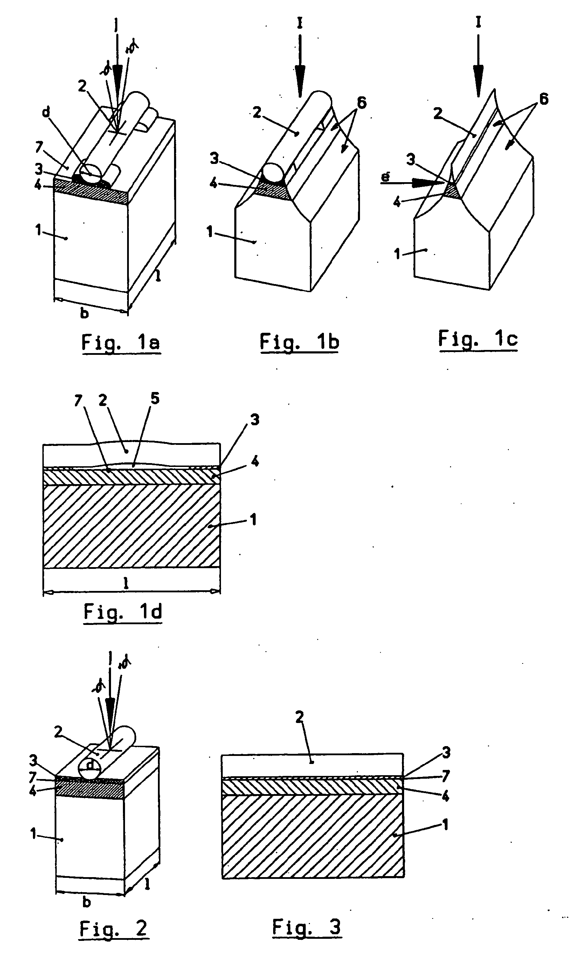

Ein Probenkörper wird aus dem Probenmaterial mit einer Diamantsäge herausgeschnitten, derart dass ein länglicher Probenkörper 1 entsteht mit der Länge 1 und der Breite b, wie dies in Fig. 1a dargestellt ist. Wenn es sich um eine Probe handelt, die aus einem Mikroelektronikwafer geschnitten ist, weist diese Probe 1 oft eine strukturierte Oberfläche 7 auf, welche zusätzlich Beschichtungen 4 oder Schichtsysteme 4 enthalten können. Eine Faser 2 mit dem Durchmesser d ist auf die Probenoberfläche 7 mit einem Klebstoff 3 aufgeklebt. Gemäss Stand der Technik wird der Klebstoff mittig zur Breite b der Probe 1 in den Endbereichen der Probenlänge 1 appliziert und die Faser 2 zentrisch zur Breite b vorsichtig positioniert. Gemäss Stand der Technik soll die Probenbreite b etwa 100 µm betragen und der Klebstoff 3 nur im Bereich der Faser 2 appliziert werden. Hierbei ist es nicht immer sichergestellt, dass die im Endbereich der Probe 1 applizierten Klebstoffpunkte 3 auch vollständig zwischen Faser und der Probenoberfläche 7 verfliessen. Dadurch entstehen wie in der Fig. 1d dargestellt vor allem bei strukturierten Probenoberflächen 7 unerwünschte Hohlräume 5, welche die Probenqualität verschlechtern beziehungsweise sogar unbrauchbar machen. In den Figuren 1a, b, c ist der Fortschritt des nachfolgenden Ätzvorganges dargestellt. Der Ionenstrahl I ist senkrecht zur Probenoberfläche 7 auf die Faser 2 gerichtet. In Fig. 1a ist dargestellt, dass der Ionenstrahl I gegenüber der senkrechten Einfallsrichtung um einen Winkel ± α gependelt werden kann. Hierbei erfolgt dieses Pendeln in der senkrechten Ebene zur Probenoberfläche 7, welche durch die Faser 2 gelegt ist. Nach einer gewissen Ätzzeit bilden sich durch den Materialabtrag der Probe 1 Flanken 6 aus, wobei bereits erkenntlich ist, dass sich eine kammartige Zuspitzung der Probe ausbildet, wie dies aus Fig. 1b ersichtlich ist. In Fig. 1c ist die Probe in ihrem Endzustand dargestellt. Die Probe 1 ist nun so stark abgeätzt durch den Ionenstrahl, dass eine eindeutige keilförmige Ausbildung quer zu ihrer Länge 1 vorliegt. Die geätzten Flanken 6 beidseits der Probe 1 schliessen nun einen länglichen Kamm ein, der spitz zuläuft und in diesem Bereich elektronendurchlässig ist für das TEM, welches mit e⁻ und einem Pfeil quer zur Probenlängsrichtung dargestellt ist. Die Faser 2 ist in diesem Zustand ebenfalls stark abgeätzt.

Im Gegensatz zum vorerwähnten Stand der Technik wird erfindungsgemäss wie in Fig. 2 dargestellt, die Probenoberfläche 7 im wesentlichen vollständig mit dem Klebstoff 3 belegt, um die Faser 2 dort zu fixieren. Bei dieser Methode erfolgt die Justierung beziehungsweise Zentrierung der Faser 2 völlig selbständig durch die wirkenden Kapillarkräfte. Als Klebstoff 3 hat sich ein fliessender Klebstoff bewährt, der nach dem Auflegen der Faser 2 aushärtet oder aushärtbar ist. Besonders geeignet ist hierbei ein Epoxyklebstoff 3, beispielsweise von der Firma Gattan Inc. 5933 Coronado Lane, Pleasanton, CA 94588 vom Typ G1. Als Faser 2 sind insbesondere Materialien wie Kohlenstoff oder Siliziumkarbid geeignet, obwohl auch andere Materialien einsetzbar sind. Die Ionenätzrate der Faser 2 sollte vorzugsweise geringer sein als diejenige des Probenmateriales 1. Durch entsprechende Auswahl des Fasermateriales kann der gewünschte Sputter - yield (Zerstäubungsgrad) optimiert werden für den Vorgang. Durch die im wesentlichen vollständige Benetzung der Probenoberfläche 7 mit dem Klebstoff 3 wird auch sichergestellt, dass zwischen Faser 2 und der Probe 1 eine vollständige Verbindung auf der ganzen Länge erzielt wird, ohne dass unerwünschte Hohlräume dazwischen entstehen und dies auch bei strukturierten Probenoberflächen 7, wie dies in Fig. 3 dargestellt ist. Die erfindungsgemässe selbständige Ausrichtung und Positionierung der Faser 2 auf der Probe 1 durch Kapillarkräfte erfolgt dann besonders einfach und günstig, wenn die Probenbreite b wesentlich kleiner ist, wie dies gemäss dem Stand der Technik vorgeschlagen wird. Die Probenbreite sollte erfindungsgemäss im Bereich von weniger als 20 µm liegen, vorzugsweise im Bereich von 10 bis 20 µm. Günstig ist ausserdem, wenn der Faserdurchmesser d die Probenbreite b nicht überragt.

In einem Beispiel wurde eine 20 µm breite Probe aus einem Halbleiterwafer herausgesägt und danach mit einem Epoxyklebstoff G1 der Firma Gattan eine SIC-Faser mit 15 µm Dikke aufgeklebt. Dazu wurde zuerst der Kleber auf die Probenoberfläche aufgebracht und danach die Faser aufgelegt, welche sich selbsttätig ausrichtete. Der Kleber wurde bei 100°C in 5 min in Atmosphäre ausgehärtet. Danach wurde mit einem Ionenstrahl unter einem Beschusswinkel gegenüber der Probenoberfläche von 90° die Probe während einer Stunde abgeätzt. Die Beschleunigungsspannung des Ionenstrahles betrug 6,5 kV und der Ionenstrom 1,8 mA. Der Ionenstrahl wurde in der zur Probenoberfläche senkrechten Ebene um ± 50° gegenüber dem Einfallswinkel des Ionenstrahles oszilliert. Das Ergebnis war eine saubere hochqualitative kammförmige elektronentransparente Probe, welche es ermöglichte, im TEM einen hohen Detallierungsgrad der ursprünglichen Materialbeschaffenheit darzustellen bei wirtschaftlichem Aufwand zur Probenherstellung.

## Patentansprüche

1. TEM-Probe aus einem Festkörpermaterial geschnitten mit der Länge (1) und der Breite (b) und mit einer stirnseitigen Probenoberfläche (7) die einen ausgehärterten Klebstoff (3) der fliessenden Art aufweist und welcher eine Faser (2) mit dem Durchmesser (d) an der Probenoberfläche (7) fixiert, ausgerichtet in Probenlängsrichtung (1), im wesentlichen zentrisch zur Breite (b) **dadurch gekennzeichnet, dass** die Probenbreite (b) maximal 20 µm beträgt, und dass der Durchmesser (d) der Faser (2) nicht grösser als die Probenbreite (b) ist, und dass der Klebstoff (3) im wesentlichen ganzflächig auf der Probenoberfläche (7) appliziert ist und die Faser (2) im wesentlichen auf ihrer ganzen Länge verklebend fixiert ist.

2. Probe nach Anspruch 2 **dadurch gekennzeichnet, dass** die Probenbreite (b) im Bereich von 10 bis 20 µm liegt.

3. Probe nach Anspruch 1 **dadurch gekennzeichnet, dass** der Durchmesser (d) der Faser (2) im Bereich von 5 bis 20 µm liegt.

4. Probe nach Anspruch 1 **dadurch gekennzeichnet, dass** die Drahtfaser (2) mindestens die Hälfte des Klebstoffes (3) abdeckt.

5. Probe nach Anspruch 1 **dadurch gekennzeichnet, dass** der Klebstoff (3) ein Epoxy - Kleber ist.

6. Probe nach Anspruch 1 **dadurch gekennzeichnet, dass** die Drahtfaser (2) aus Kohlenstoff oder aus Siliziumkarbid besteht.

7. Verfahren zur Herstellung einer TEM-Probe aus einem Festkörpermaterial geschnitten mit der Länge (1) und der Breite (b) und mit einer stirnseitigen Probenoberfläche (7) auf die ein aushärtbarer Klebstoff (3) der fliessenden Art aufgebracht wird zur Fixierung einer Faser (2) mit einem Durchmesser (d) an der Probenoberfläche (7), ausgerichtet in Probenlängsrichtung (1), im wesentlichen zentrisch zur Breite (b) **dadurch gekennzeichnet, dass** die Probe auf eine Breite (b) von maximal 20 µm geschnitten wird, und dass der Durchmesser (d) der Faser (2) nicht grösser als die Probenbreite (b) ist, und dass der Klebstoff (3) im wesentlichen ganzflächig auf der Probenoberfläche (7) appliziert wird und die Faser (2) bei auflegen auf den fliessenden Klebstoff (3) sich selber durch die wirkenden Kapillarkräfte an der Probenoberfläche zentrisch ausrichtet und im wesentlichen auf ihrer ganzen Länge mit dem Klebstoff (3) benetzt wird und dass dieser anschliessend ausgehärtet wird.

8. Verfahren nach Anspruch 9 **dadurch gekennzeichnet, dass** die Probe auf eine Breite (b) im Bereich von 10 bis 20 µm geschnitten wird.

9. Verfahren nach Anspruch 10 **dadurch gekennzeichnet, dass** der Durchmesser (d) der Faser (2) im Bereich von 5 bis 20 µm liegt.

10. Verfahren nach Anspruch 11 **dadurch gekennzeichnet, dass** die Faser (2) mindestens die Hälfte des Klebstoffes (3) abdeckt.

11. Verfahren nach Anspruch 12 **dadurch gekennzeichnet, dass** als Klebstoff (3) ein Epoxy - Kleber verwendet wird.

12. Verfahren nach Anspruch 13 **dadurch gekennzeichnet, dass** als Fasermaterial (2) Kohlenstoff oder Siliziumkarbid verwendet wird.

## Claims

1. TEM specimen cut from a solid body material with length (1) and width (b) and with a face-side specimen surface (7) comprising a hardened fluid-type adhesive (13) which fixes to the specimen surface (7) a fibre (2) with diameter (d) aligned in the specimen longitudinal direction (1) and substantially central to the width (b), **characterised in that** the specimen width (b) is maximum 20 µm and the diameter (d) of the fibre (2) is no greater than the specimen width (b) and that the adhesive (3) is applied substantially over the entire surface of the specimen (7) and the fibre (2) is fixed substantially glued over its entire length.

2. Specimen according to claim 2, **characterised in that** the specimen width (b) lies in the range from 10 to 20 µm.

3. Specimen according to claim 1, **characterised in that** the diameter (d) of the fibre (2) lies in the range from 5 to 20 µm.

4. Specimen according to claim 1, **characterised in that** the wire fibre (2) covers at least half the adhesive (3).

5. Specimen according to claim 1, **characterised in that** the adhesive (3) is an epoxy adhesive.

6. Specimen according to claim 1, **characterised in that** the wire fibre (2) comprises carbon or silicon carbide.

7. Method for production of a TEM specimen cut from a solid body material with a length (1) and width (b) and with a face-side specimen surface (7) to which is applied a hardenable fluid-type adhesive (3) for fixing to the specimen surface (7) a fibre (2) with diameter (d) aligned in the specimen longitudinal direction (1) and substantially central to the width (b), **characterised in that** the specimen is cut to a width (b) of maximum 20 µm and that the diameter (d) of the fibre (2) is no greater than the specimen width (b), and that the adhesive (3) is applied substantially over the entire specimen surface (7) and when applied to the fluid adhesive (3), due to the capillary forces acting, the fibre (2) aligns itself centrally to the specimen surface and is coated substantially over its entire length with the adhesive (3) which is then hardened.

8. Method according to claim 9, **characterised in that** the specimen is cut to a width (b) in the range from 10 to 20 µm.

9. Method according to claim 10, **characterised in that** the diameter (d) of the fibre (2) lies in the range from 5 to 20 µm.

10. Method according to claim 11, **characterised in that** the fibre (2) covers at least half the adhesive (3).

11. Method according to claim 12, **characterised in that** an epoxy adhesive is used as the adhesive (3).

12. Method according to claim 13, **characterised in that** carbon or silicon carbide is used as the fibre material (2).

## Revendications

1. Echantillon pour Microscopie Electronique à Transmission (MET), taillé dans un matériau monolithique, de longueur (I) et de largeur (b), et présentant une face supérieure (7) d'examen pourvue d'une colle durcie (3), de type fluide, qui fixe à ladite face d'examen (7) une fibre (2) de diamètre (d), orientée dans le sens de la longueur (I) de l'échantillon et sensiblement centrée sur la largeur (b) de celui-ci, **caractérisé par le fait que** la largeur (b) de l'échantillon est de 20 µm au maximum, que le diamètre (d) de la fibre (2) ne dépasse pas la largeur (b) de l'échantillon, que la colle (3) est appliquée sensiblement sur la totalité de la face supérieure d'examen (7) et que la fibre (2) est fixée par collage sensiblement sur toute sa longueur.

2. Echantillon selon la revendication 1, **caractérisé par le fait que** la largeur (b) dudit échantillon est comprise entre 10 et 20 µm.

3. Echantillon selon la revendication 1, **caractérisé par le fait que** le diamètre (d) de la fibre (2) est compris entre 5 et 20 µm.

4. Echantillon selon la revendication 1, **caractérisé par le fait que** la fibre (2) est un fil de diamètre (d) recouvrant au moins la moitié de la colle (3).

5. Echantillon selon la revendication 1, **caractérisé par le fait que** la colle (3) est une colle époxy.

6. Echantillon selon la revendication 1, **caractérisé par le fait que** la fibre (2) est un fil de carbone ou de carbure de silicium.

7. Procédé de préparation d'un échantillon pour MET, taillé dans un matériau monolithique, de longueur (I) et de largeur (b) et présentant une face supérieure d'examen (7) sur laquelle est appliquée une colle durcissable (3) de type fluide, afin de fixer sur elle (7) une fibre (2) de diamètre (d), orientée dans le sens de la longueur (I) de l'échantillon et sensiblement centrée sur la largeur (b) de celui-ci, **caractérisé par le fait que** l'on coupe l'échantillon à une largeur maximale de 20 µm et que le diamètre (d) de la fibre (2) ne dépasse pas la largeur (b) de l'échantillon, **par le fait que** l'on applique la colle (3) sur sensiblement la totalité de ladite face d'examen (7) et que la fibre (2) se centre automatiquement sur la face d'examen de l'échantillon, sous l'effet de l'attraction capillaire, en étant mouillée par la colle (3) sur sensiblement toute sa longueur et **par le fait que** cette dernière est ensuite durcie.

8. Procédé selon la revendication 7, **caractérisé par le fait que** l'on coupe l'échantillon à une largeur (b) comprise entre 10 et 20 µm.

9. Procédé selon la revendication 7, **caractérisé par le fait que** le diamètre (d) de la fibre (2) est compris entre 5 et 20 µm.

10. Procédé selon la revendication 7, **caractérisé par le fait que** la fibre (2) couvre en diamètre au moins la moitié de la colle (3).

11. Procédé selon la revendication 7, **caractérisé par le fait que** la colle (3) utilisée est une colle époxy.

12. Procédé selon la revendication 7, **caractérisé par le fait que** la fibre (2) est en carbone ou en carbure de silicium.
